(19) Europäisches Patentamt / European Patent Office / Office européen des brevets

(11) **EP 4 644 579 A1**

(12) **EUROPEAN PATENT APPLICATION**
published in accordance with Art. 153(4) EPC

(43) Date of publication:
**05.11.2025 Bulletin 2025/45**

(21) Application number: 23912719.4

(22) Date of filing: **18.12.2023**

(51) International Patent Classification (IPC):
*C22C 38/58* (2006.01)     *C22C 38/34* (2006.01)
*C22C 38/06* (2006.01)     *C22C 38/44* (2006.01)
*C22C 38/42* (2006.01)     *C22C 38/50* (2006.01)
*C22C 38/48* (2006.01)     *C22C 38/46* (2006.01)
*C22C 38/54* (2006.01)     *C21D 8/02* (2006.01)

(52) Cooperative Patent Classification (CPC):
**C21D 1/18; C21D 8/02; C22C 38/06; C22C 38/34;
C22C 38/42; C22C 38/44; C22C 38/46;
C22C 38/48; C22C 38/50; C22C 38/54; C22C 38/58**

(86) International application number:
**PCT/KR2023/020880**

(87) International publication number:
**WO 2024/144044 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 KR 20220189694**

(71) Applicant: **Hyundai Steel Company
Incheon 22525 (KR)**

(72) Inventors:
• **PARK, Bong June
Incheon 22525 (KR)**

• **JANG, Min Ho
Incheon 22525 (KR)**
• **LA, Joung Hyun
Incheon 22525 (KR)**
• **PARK, Min Suh
Incheon 22525 (KR)**
• **HAN, Seong Kyung
Incheon 22525 (KR)**

(74) Representative: **Viering, Jentschura & Partner
mbB
Patent- und Rechtsanwälte
Am Brauhaus 8
01099 Dresden (DE)**

(54) **ULTRA-HIGH STRENGTH COLD-ROLLED STEEL SHEET WITH CORROSION RESISTANCE AND MANUFACTURING METHOD THEREFOR**

(57) Provided is an ultra-high-strength cold-rolled steel plate with corrosion resistance, including: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the remainder containing iron (Fe) and other inevitable impurities, wherein a ratio ([Cu]/[Ni]) of the content of the copper (Cu) to the content of the nickel (Ni) ranges from 0.54 to 5.7, and the ultra-high-strength cold-rolled steel plate satisfies: yield strength (YS): 1000 MPa or more, tensile strength (TS): 1100 MPa or more, elongation index (EL): 3% or more, and hydrogen embrittlement test method-based non-fracture time: 100 hours or more.

EP 4 644 579 A1

# FIG. 1

```
            ( Start )
                |
                v
  Manufacture hot-rolled steel plate ─── S110
                |
                v
  Manufacture cold-rolled steel plate ─── S120
                |
                v
            Anneal ─── S130
                |
                v
          First cool ─── S140
                |
                v
         Second cool ─── S150
                |
                v
            Temper ─── S160
                |
                v
          Third cool ─── S170
                |
                v
             ( End )
```

**Description**

[Technical Field]

The technical idea of the present invention relates to a steel, and more particularly to an ultra-high-strength cold-rolled steel plate with excellent corrosion resistance and a method of manufacturing the same.

[Background Art]

In the automotive industry, the demand for crash safety of automobile bodies has been continuously increasing. As electric automobiles have become more widespread, the number of automobile parts has decreased, but the weight of automobiles has increased due to the introduction of batteries, which has led to an increase in the demand for crash safety. Accordingly, the ultra-high strength of crash-absorbing components such as front bumper beams, side sills, and door impact beams that contribute to crash safety is also being continuously improved. In particular, in the case of martensite steel with the highest strength among cold-rolled steel plates, its application has expanded due to the increased use of roll forming techniques, but there is an issue of delayed fracture due to high strength. Especially, corrosion in hydrogen permeation environments is known to be a representative fracture behavior of this delayed fracture. Accordingly, much research has been conducted to enhance the corrosion resistance or hydrogen embrittlement resistance of ultra-high strength plates with a tensile strength of 1 GPa or higher, but it is still insufficient.

The following attempts have been proposed to improve the corrosion resistance of cold-rolled steel plates. In relation to delayed fracture by hydrogen, a method of increasing hydrogen embrittlement resistance by controlling the residual hydrogen content in steel, specifically a method of increasing hydrogen embrittlement resistance by controlling the content of hydrogen to 0.1 ppm or less during a heat treatment process maintained at 350 to 450 °C after cold rolling, was proposed. In addition, a method of controlling the area fraction of ferrite and upper bainite and martensite, adding boron, a grain-boundary strengthening element, controlling the effective grain size of martensite, and controlling the number of iron-based carbides was proposed. In addition, a method of increasing the hydrogen embrittlement resistance of a steel plate of 1.1 GPa or higher by controlling the grain sizes and aspect ratios of ferrite and martensite based on a cold-rolling pressure ratio was proposed. This hydrogen embrittlement is being addressed as an important research topic not only in cold-rolled steel plates for automobiles but also in steel for pressure vessels. A method of delaying the propagation speed of cracks caused by hydrogen embrittlement by forming a microstructure, wherein the fraction of band structures in the microstructure can be lowered based on the increase in hydrogen embrittlement resistance due to the addition of copper, was proposed. In addition, a method of increasing hydrogen embrittlement resistance by adding nickel in an amount of 1% to 4% by weight was proposed. A method of limiting the proportions of manganese, nickel, and copper was proposed to improve the stability of austenite during the manufacture of high-strength steel plates. In this case, nickel and copper were added to secure hardenability in a steel plate with high aluminum content rather than to prevent delayed fracture due to hydrogen. As a related technical document, there is Korean Patent Application Publication No. 2012-0144482.

[Disclosure]

[Technical Problem]

Therefore, the present invention has been made in view of the above problems, and it is one object of the present invention to provide an ultra-high-strength cold-rolled steel plate having a tensile strength of 1.1 GPa or more and excellent corrosion resistance and a method of manufacturing the same.

It will be understood that the technical problems are only provided as examples, and the technical idea of the present invention is not limited thereto.

[Technical Solution]

In accordance with an aspect of the present invention, the above and other objects can be accomplished by the provision of an ultra-high-strength cold-rolled steel plate with corrosion resistance.

According to an embodiment of the present invention, the high-strength cold-rolled steel plate includes: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and a remainder containing iron (Fe) and other inevitable impurities, wherein a ratio ([Cu]/[Ni]) of the content of the copper (Cu) to the content of the nickel (Ni) ranges from 0.54 to 5.7, and the ultra-high-strength cold-rolled steel plate satisfies: yield strength (YS): 1000 MPa or more, tensile strength (TS): 1100 MPa or more, elongation index (EL): 3% or more, and hydrogen embrittlement test method-based non-fracture time: 100 hours or more.

According to an embodiment of the present invention, a microstructure of the ultra-high-strength cold-rolled steel plate with corrosion resistance may be selected from among ferrite, bainite and retained austenite in which an area fraction of martensite is 95% or more and less than 100% and an area fraction of remaining phases is greater than 0 and 5 % or less.

According to an embodiment of the present invention, the ultra-high-strength cold-rolled steel plate with corrosion resistance may further include carbides, wherein the carbides have an average size of 100 nm or less and an aspect ratio of 5 or less.

According to an embodiment of the present invention, the carbides may include at least one of Fe-based carbides, Ti-based carbides, Nb-based carbides, V-based carbides, and Mo-based carbides.

In accordance with another aspect of the present invention, there is provided a method of manufacturing an ultra-high-strength cold-rolled steel plate with corrosion resistance.

According to an embodiment of the present invention, in the method of manufacturing an ultra-high-strength cold-rolled steel plate with corrosion resistance, the method including: manufacturing a hot-rolled steel plate by hot-rolling a steel comprising: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and a remainder containing iron (Fe) and other inevitable impurities, in which a ratio ([Cu]/[Ni]) of the content of the copper (Cu) to the content of the nickel (Ni) ranges from 0.54 to 5.7; manufacturing a cold-rolled steel plate by cold-rolling the hot-rolled steel plate; annealing the cold-rolled steel plate by maintaining it at 800°C to 900°C for 60 seconds to 600 seconds; first cooling the annealed cold-rolled steel plate to 500°C to 700°C at a cooling rate of 1 °C/sec to 20 °C/sec; second cooling the first cooled cold-rolled steel plate to a temperature of less than Mf at a cooling rate of 5 °C/sec to 100 °C/sec; and tempering the cold-rolled steel plate, which has been subjected to the second cooling, at 100°C to 350°C.

According to an embodiment of the present invention, the manufacturing of the hot-rolled steel plate may include: reheating the steel having the alloy compositions at a reheating temperature of 1,150°C to 1,300°C; manufacturing a hot-rolled steel plate by hot-rolling the reheated steel such that the hot-rolling is finished at a finish rolling temperature of 800°C to 1,000°C; and coiling the hot-rolled steel plate at a coiling temperature of 400°C to 700°C.

According to an embodiment of the present invention, the tempering may be performed in a temperature range of greater than 200°C and 350°C or less for 60 seconds to 600 seconds.

According to an embodiment of the present invention, the tempering may be performed in a temperature range of 100°C to 200°C for 3 hours to 20 hours.

In accordance with still another aspect of the present invention, there is provided a method of manufacturing an ultra-high-strength cold-rolled steel plate with corrosion resistance, the method including plating with molten zinc.

According to an embodiment of the present invention, in the method of manufacturing an ultra-high-strength cold-rolled steel plate with corrosion resistance, the method including: manufacturing a hot-rolled steel plate by hot-rolling a steel comprising: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and a remainder containing iron (Fe) and other inevitable impurities, in which a ratio ([Cu]/[Ni]) of the content of the copper (Cu) to the content of the nickel (Ni) ranges from 0.54 to 5.7; manufacturing a cold-rolled steel plate by cold-rolling the hot-rolled steel plate; annealing the cold-rolled steel plate by maintaining it at 800°C to 900°C for 60 seconds to 600 seconds; first cooling the annealed cold-rolled steel plate to 500°C to 700°C at a cooling rate of 1 °C/sec to 20 °C/sec; second cooling the first cooled cold-rolled steel plate to 400°C to 500°C at a cooling rate of 5 °C/sec to 100 °C/sec; molten zinc-plating the second cooled cold-rolled steel plate; and tempering the molten zinc-plated cold-rolled steel plate at 100°C to 350°C.

According to an embodiment of the present invention, the method may further include, between the molten zinc-plating and the tempering, alloying the molten zinc-plated cold-rolled steel plate through heat treatment at 450°C to 600°C.

According to an embodiment of the present invention, the tempering may be performed in a temperature range of higher than 200°C and 350°C or less for 60 seconds to 600 seconds.

According to an embodiment of the present invention, the tempering may be performed in a temperature range of 100°C to 200°C for 3 hours to 20 hours.

[Advantageous effects]

According to the technical idea of the present invention, a cold-rolled steel plate with high tensile strength and excellent hydrogen embrittlement resistance can be manufactured by controlling the content ratio of copper to nickel (([Cu]/[Ni])) and thus controlling the reheating temperature during hot-rolling in an appropriate range. The effects of the present invention are described as examples, and the scope of the present invention is not limited by these effects.

[Description of Drawings]

FIG. 1 is a process flowchart schematically illustrating a method of manufacturing an ultra-high-strength cold-rolled steel plate with corrosion resistance according to an embodiment of the present invention.
FIG. 2 illustrates the heat treatment history over time of an embodiment of the present invention.
FIG. 3 is a process flowchart schematically illustrating a method of manufacturing an ultra-high-strength melt-plated cold-rolled steel plate with corrosion resistance according to an embodiment of the present invention.
FIG. 4 illustrates the heat treatment history over time of an embodiment of the present invention.
FIG. 5 illustrates the melting point of a Cu-Ni homogeneous solid solution calculated using the ThermoCalc program.
FIG. 6 is a set of photographs illustrating the fractured states after performing a hydrogen embrittlement test on an ultra-high-strength cold-rolled steel plate with corrosion resistance according to an embodiment of the present invention.

[Best Mode]

Hereinafter, preferred embodiments of the present invention will be described in detail with reference to the accompanying drawings. Embodiments of the present invention are provided to more completely explain the technical idea of the present invention to those skilled in the art, and the following embodiments may be modified in many different forms, but the scope of the technical idea of the present invention is not limited to the following embodiments. Rather, the embodiments are provided to make the invention thorough and complete and to fully convey the technical idea of the invention to those skilled in the art. Like reference numerals in the specification denote like elements. Further, various elements and regions in the drawings are schematically drawn. Therefore, the technical idea of the invention is not limited by the relative size or spacing drawn in the accompanying drawings.

The technical idea of the present invention provides a corrosion-resistant ultra-high-strength cold-rolled steel plate whose hydrogen embrittlement resistance has been increased by controlling their component contents and microstructure composition for application to an ultra-high-strength steel plate for automobiles having a tensile strength of 1100 MPa or more; and a method of manufacturing the corrosion-resistant ultra-high-strength cold-rolled steel plate.

Hereinafter, an ultra-high-strength cold-rolled steel plate with corrosion resistance according to the technical idea of the present invention is described in detail.

The ultra-high-strength cold-rolled steel plate with corrosion resistance according to an embodiment of the present invention includes: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the remainder containing iron (Fe) and other inevitable impurities.

Hereinafter, the function and content of each component included in the ultra-high-strength cold-rolled steel plate with corrosion resistance according to the present invention are described. Here, the content of each component element means % by weight based on the entire steel plate.

Carbon (C): 0.1% to 0.5%

Carbon is added to secure the strength of a steel plate and control its microstructure, and can secure strength by improving the hardness of martensite. When the carbon content is less than 0.1%, it is difficult to achieve target strength. When the content of carbon exceeds 0.5%, weldability and workability may deteriorate. Therefore, it is desirable to add carbon in a content of 0.1% to 0.5% of the total weight of a steel plate.

Silicon (Si): 0.01% to 2.0%

Silicon is a ferrite-stabilizing element that can ensure hydrogen embrittlement resistance by suppressing the growth of cementite. When the content of silicon is less than 0.01%, effects due to silicon addition are insufficient. When the content of silicon exceeds 2.0%, a large amount of ferrite may be formed so that target strength may not be secured. Therefore, it is desirable to add silicon in a content of 0.01% to 2.0% of the total weight of a steel plate.

Manganese (Mn): 0.1% to 5.0%

Manganese has a solid solution-strengthening effect and can contribute to strength improvement by increasing hardenability. When the content of manganese is less than 0.1%, it is difficult to secure strength because hardenability is insufficient, and effects due to manganese addition are insufficient. When the content of manganese exceeds 5.0%, hydrogen embrittlement resistance may be reduced due to the formation of manganese bands and the formation of MnS. Therefore, it is desirable to add manganese in a content of 0.1% to 5.0% of the total weight of a steel plate.

Aluminum (Al): 0.01% to 2.0%

Aluminum is used as a deoxidizer and can help purify ferrite. When the content of aluminum is less than 0.01%, effects due to aluminum addition, such as deoxidation effect, are insufficient. When the content of aluminum exceeds 2.0%, AlN may be formed during slab manufacturing, which may cause cracks during casting or hot rolling, and a large amount of ferrite may be formed, which may reduce strength. Therefore, it is desirable to add aluminum in a content of 0.01% to 2.0% of the total weight of a steel plate.

Chromium (Cr): Greater than 0% and 3.0% or less

Chromium, which is a steel ferrite-stabilizing element, improves hardenability, and can contribute to the improvement of strength by refining carbides. When the content of chromium exceeds 3.0%, the manufacturing cost is relatively high, and the quenching effect during cooling is large, which leads to an increase in strength. Accordingly, an elongation index may relatively decrease and laser weldability may deteriorate. Therefore, it is desirable to add chromium in a content of greater than 0% and 3.0% or less of the total weight of a steel plate.

Molybdenum (Mo): Greater than 0% and 1.0% or less

Molybdenum has a solid solution-strengthening effect and can contribute to strength improvement by increasing hardenability. In addition, it can improve hydrogen embrittlement resistance by refining Ti-based precipitates. When the content of molybdenum exceeds 1.0%, the material cost may increase. Therefore, it is desirable to add molybdenum in a content of greater than 0% and 1.0% or less of the total weight of a steel plate.

Copper (Cu): 0.02% to 3.0%

Copper is a precipitate-forming element that forms carbides or nitrides by combining with carbon (C) and nitrogen (N). Through this precipitation and the grain refinement consequent to the suppression of recrystallization and grain growth during precipitation and rolling, the toughness and strength of steel can be improved. In addition, it can be added to increase hydrogen embrittlement resistance. When the content of copper is less than 0.02%, effects due to copper addition are insufficient and delayed fracture may occur. When the content of copper exceeds 3.0%, it may cause cracks during hot-rolling as a high-temperature embrittlement-inducing element, a rolling load may increase significantly during rolling, and the manufacturing cost of steel may increase. Therefore, it is desirable to add copper in a content of 0.02% to 3.0% of the total weight of a steel plate.

Nickel (Ni): 0.02% to 3.0%

Nickel is a precipitate-forming element that forms carbides or nitrides by combining with carbon (C) and nitrogen (N). Through this precipitation and the grain refinement consequent to the suppression of recrystallization and grain growth during rolling, it can improve the toughness and strength of steel. In addition, it can suppress hot shortness due to copper. When the content of nickel is less than 0.02%, effects due to nickel addition are insufficient. When the content of nickel exceeds 3.0%, the rolling load may increase significantly during rolling, which may increase the manufacturing cost of steel. Therefore, it is desirable to add nickel at 0.02% to 3.0% of the total weight of a steel plate. In particular, nickel needs to be added in an appropriate ratio to the copper content to prevent the melting of copper during a reheating process, which will be explained in more detail.

[Cu]/[Ni] : 0.54 to 5.7

In the ultra-high-strength cold-rolled steel plate with corrosion resistance, the ratio of the copper (Cu) content divided by the nickel (Ni) content ([Cu]/[Ni]) can be 0.54 to 5.7. Here, [Cu] indicates the content (% by weight) of copper (Cu), and [Ni] indicates the content (% by weight) of nickel (Ni). This [Cu]/[Ni] ratio is to prevent liquid Cu from penetrating into the grain boundaries of a steel plate during a reheating step for hot-rolling and weakening the boundaries.

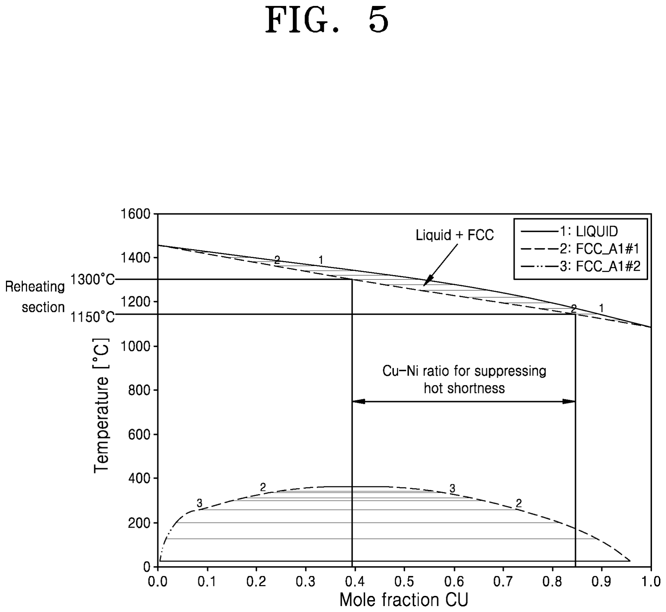

The melting point of copper is 1084.6°C, which is lower than that of iron. When copper exists within a slab, it can move to its surface. When the surface temperature of a slab or bar is higher than the melting point of copper, copper that has moved to the surface may melt and penetrate along the grain boundaries of steel, leading to hot shortness that causes a decrease in ductility and the occurrence of cracks. One way to prevent this hot shortness is to add nickel to form the homogeneous solid solution of copper and nickel, thereby inhibiting the melting of copper. Therefore, the temperature of the Cu-Ni homogeneous solid solution needs to be at least 1150 °C to prevent liquid copper from penetrating into a steel plate during reheating. In addition, the upper limit of the melting point of the Cu-Ni homogeneous solid solution was set to 1300°C or less to suppress the cost increase due to nickel addition. The melting point of the Cu-Ni homogeneous solid solution was calculated using the ThermoCalc program, which is shown in FIG. 5. The "Cu-Ni ratio for hot shortness suppression", i.e., [Cu]/[Ni]j, shown in FIG. 5 is in a range of 0.54 to 5.7.

Titanium (Ti): 0.01% to 0.2%

Titanium is a precipitate-forming element that can provide the precipitation and grain refinement effects of TiN and TiC. In particular, the nitrogen content inside the steel can be reduced through the precipitation of TiN, and when added together with boron, the precipitation of BN can be prevented, so the solid solution state of boron, a grain boundary-strengthening element, can be maintained. When the titanium content is less than 0.01%, the precipitation of BN may be induced and effects due to titanium addition are insufficient. If the content of titanium exceeds 0.2%, hydrogen embrittlement resistance may decrease due to the coarsening of TiN precipitation, and it may be difficult to secure strength due to reduced solid solubility of carbon in a base material, which may increase the manufacturing cost of steel. Therefore, it is desirable to add titanium in a content of 0.01% to 0.2% of the total weight of a steel plate.

Niobium (Nb): 0.01% to 0.1%

Niobium is a precipitate-forming element that forms carbides or nitrides by combining with carbon (C) and nitrogen (N), and can improve the toughness and strength of steel through grain refinement consequent to the suppression of this precipitation and the recrystallization and grain growth during rolling. When the content of niobium is less than 0.01%, there is no grain refinement effect and the effect of adding niobium is insufficient. When the content of niobium exceeds 0.1%, precipitates may grow and there may be no strength-increasing effect, the rolling load may increase significantly during rolling, and the manufacturing cost of steel may increase. Therefore, it is desirable to add niobium in a content of 0.01% to 0.1% of the total weight of a steel plate.

Vanadium (V): 0.01% to 1.0%

Vanadium is a precipitate-forming element that forms carbides or nitrides by combining with carbon (C) and nitrogen (N), and can improve the toughness and strength of steel through grain refinement consequent to the suppression of this precipitation and the recrystallization and grain growth during rolling. When the content of vanadium is less than 0.01%, there is no grain refinement effect and effects due to vanadium addition is insufficient. When the content of vanadium exceeds 1.0%, precipitates may grow and there may be no strength-increasing effect. In addition, the rolling load may increase significantly during rolling, and the manufacturing cost of steel may increase. Therefore, it is desirable to add vanadium in a content of 0.01% to 1.0% of the total weight of a steel plate.

Boron (B): 0.001% to 0.005%

Boron is a grain boundary-strengthening element that can increase hydrogen embrittlement resistance when distributed at grain boundaries. When the content of boron is less than 0.001%, effects due to boron addition are insufficient. When the content of boron exceeds 0.005%, there is a risk of grain boundary embrittlement due to BN formation. Therefore, it is desirable to add boron in a content of 0.001% to 0.005% of the total weight of a steel plate.

Phosphorus (P): Greater than 0% and 0.02% or less

Phosphorus is an impurity contained in a steel manufacturing process. Phosphorus can help improve strength through solid solution strengthening, but when it is contained in a large amount, low-temperature brittleness may occur due to grain boundary segregation and point weldability may be reduced. Therefore, it is desirable to limit phosphorus to a content of greater than 0% and 0.02% or less of the total weight of a steel plate.

Sulfur (S): Greater than 0% and 0.01% or less

Sulfur is an impurity included in a steel manufacturing process, and can form non-metallic inclusions such as FeS and MnS, which can reduce toughness, hydrogen embrittlement resistance, and weldability. Therefore, it is desirable to limit sulfur to a content of greater than 0% and 0.01% or less of the total weight of a steel plate.

The remaining component of the ultra-high-strength cold-rolled steel plate with corrosion resistance is iron (Fe). However, since unintended impurities from raw materials or a surrounding environment may inevitably be mixed during a normal steelmaking process, this cannot be ruled out. These impurities are known to anyone skilled in the art of manufacturing and therefore are not specifically mentioned in this specification.

An ultra-high-strength cold-rolled steel plate with corrosion resistance, manufactured by controlling the specific components of the alloy composition described above and the content ranges thereof and through the manufacturing method described below, may satisfy: for example, yield strength (YS): 1000 MPa or more, tensile strength (TS): 1100 MPa or more, elongation index (EL): 3% or more, and hydrogen embrittlement test method-based non-fracture time: 100 hours or more. In addition, the ultra-high-strength cold-rolled steel plate with corrosion resistance may satisfy: for example, yield strength (YS): 1000 MPa to 1700 MPa, tensile strength (TS): 1100 MPa to 1900 MPa, and elongation index (EL): 3% to 9%, and hydrogen embrittlement test method-based non-fracture time: 100 hours to 300 hours.

The ultra-high-strength cold-rolled steel plate with corrosion resistance has a microstructure with a martensite/tempered martensite area fraction of 95% or more. Here, the "martensite/tempered martensite" means the sum of fresh martensite and tempered martensite without distinction. For example, the area fraction of the martensite/tempered martensite may range from 95% or more and less than 100%, and the remaining phases may be one or more phases selected from ferrite, bainite and retained austenite having an area fraction of greater than 0 and 5% or less. The area fraction refers to an area ratio derived from a microstructure photograph using an image analyzer. In addition, the area fraction of the microstructure is based on the result of analysis performed at 1/4 of the thickness direction of a steel plate in a direction perpendicular to a rolling direction using a scanning electron microscope.

Carbides should be present to suppress delayed fracture due to hydrogen embrittlement. These carbides can act to capture and fix hydrogen so that hydrogen diffused and penetrated into a steel plate cannot freely move inside the steel plate. However, when the size of the carbides is too large, brittleness may occur due to hydrogen collected at boundaries, so it is desirable to limit the size of the carbides.

Therefore, the ultra-high-strength cold-rolled steel plate with corrosion resistance may contain more carbides. The carbides may have an average size (particle diameter) of, for example, 100 nm or less, for example, in the range of 1 nm to 100 nm. The carbides may have an aspect ratio of, for example, 5 or less, for example in the range of 1 to 5. Here, the aspect ratio refers to the ratio of the major axis length of the carbides to the minor axis length thereof. When the average size of the carbides exceeds 100 nm, it may be considered that martensite was formed due to excessive tempering or insufficient stabilization of retained austenite.

The carbides may include both cementite and transition carbides or may include carbides in which Fe is not present, and may include at least one of, for example, Fe-based carbides, Ti-based carbides, Nb-based carbides, V-based carbides, and Mo-based carbides. Specifically, the carbides may include at least one of, for example, $Fe_3C$, $\varepsilon$-carbides $(Fe_{2.5}C)$, $\eta$-carbides $(Fe_2C)$, (Fe, substitutional element)$_{2\sim3}$(C), and (Ti, Nb, V, Mo)(C, N).

Hydrogen embrittlement test method

A hydrogen embrittlement test method for quantitatively measuring the delayed fracture, which is caused by hydrogen embrittlement, of the ultra-high-strength cold-rolled steel plate with corrosion resistance in the present invention is as follows.

Cold-rolled steel plates are cut using shear, laser, water jet, milling, wire (EDM), etc. to prepare specimens with a length of 100 mm to 300 mm and a width of 10 mm to 50 mm. Here, the longitudinal direction of each specimen is manufactured so that it is 0 or 90 degrees to the rolling direction of the material.

Next, the specimen is subjected to stresses of 60%, 70%, 80%, 90%, and 100% of yield strength using a 2-point or 4-point bending method. Here, the applied stress should be changed depending upon the yield strength of each cold-rolled steel plate. The objective is to achieve no fracture under three or more conditions, including 100% stress condition specimens, of the stress application conditions.

The stressed specimen is immersed in a hydrochloric acid (HCl) solution at a concentration of 0.01 N to 0.2 N, preferably a 0.1 N hydrochloric acid solution. Since hydrogen is injected into the interior of the specimen by this immersion, it can be said to be an accelerated test of delayed fracture by hydrogen. The immersed test piece is maintained for 100 hours or more. Here, the objective is to ensure that no fracture occurs under any of the stress conditions.

Hereinafter, a method of manufacturing the ultra-high-strength cold-rolled steel plate with corrosion resistance according to the present invention is described with reference to the accompanying drawings.

<u>Method of manufacturing ultra-high-strength cold-rolled steel plate with corrosion resistance</u>

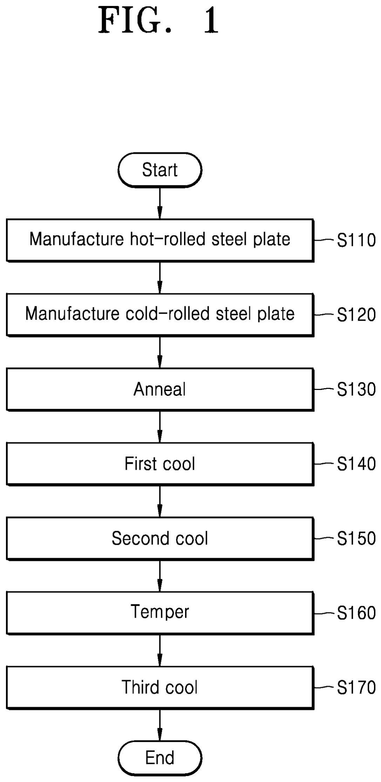

FIG. 1 is a process flowchart schematically illustrating a method of manufacturing the ultra-high-strength cold-rolled steel plate with corrosion resistance according to an embodiment of the present invention, and relates to a method of manufacturing a non-plated cold-rolled steel plate.

Referring to FIG. 1, the method of manufacturing an ultra-high-strength cold-rolled steel plate with corrosion resistance according to an embodiment of the present invention includes a hot-rolled steel plate manufacturing step (S110), a cold-rolled steel plate manufacturing step (S120), an annealing step (S130), a first cooling step (S140), a second cooling step (S150), a tempering step (S160), and a third cooling step (S170).

<u>Hot-rolled steel plate manufacturing step (S110)</u>

In the hot-rolled steel plate manufacturing step (S110), a steel including, in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the remainder containing iron (Fe) and other inevitable impurities is prepared.

In the manufacturing method according to the present invention, a semi-finished product to be subject to a hot-rolling process may be, for example, a slab. Slabs in a semi-finished product state can be obtained through a continuous casting process after obtaining molten steel with a certain composition through a steelmaking process.

The steel, for example, a slab, is reheated at a reheating temperature (Slab Reheating Temperature, SRT) of 1,150°C to 1,300°C for 1 to 5 hours. Through this reheating, a complete transformation into a single austenite phase can occur, and the components segregated during casting can be re-dissolved and the precipitates can be re-dissolved, thereby homogenizing the steel and making it ready for hot rolling.

As explained above, the slab reheating temperature in the present invention is set by considering the melting point of the homogeneous solid solution of the added elements, copper and nickel. The temperature of the Cu-Ni homogeneous solid solution should be 1150°C or higher to prevent liquid copper from penetrating into a steel plate during reheating. When the reheating temperature is less than 1,150°C, the components segregated during casting may not be sufficiently re-dissolved and thus may not be evenly distributed.

In addition, to suppress the cost increase due to nickel addition, the upper limit of the melting point of the Cu-Ni homogeneous solid solution was set to 1300°C or less. When the reheating temperature is higher than 1,300°C, austenite grains may become coarser, which may cause a decrease in yield strength. In addition, as the reheating temperature increases, problems such as manufacturing cost increase and productivity decrease may occur due to the heating cost, the additional time required to match the hot-rolling temperature, and the like.

When the reheating time is less than 1 hour, the reduction of segregation zone may not be sufficient, and when it exceeds 5 hours, the grain size may increase and the process cost may increase.

The melting point of copper is 1084.6°C, which is lower than that of iron. When copper exists within a slab, it can move to its surface. When the surface temperature of a slab or bar is higher than the melting point of copper, copper that has moved to the surface may melt and penetrate along the grain boundaries of steel, leading to hot shortness that causes a decrease in ductility and the occurrence of cracks. One way to prevent this hot shortness is to add nickel to form the homogeneous solid solution of copper and nickel, thereby inhibiting the melting of copper. Therefore, the temperature of the Cu-Ni solid solution needs to be at least 1150 °C to prevent liquid copper from penetrating into a steel plate during reheating. In addition, the upper limit of the melting point of the Cu-Ni solid solution was set to 1300°C or less to suppress the cost increase due to nickel addition. The melting point of the Cu-Ni solid solution was calculated using the ThermoCalc program, which is shown in FIG. 5.

Next, the reheated steel is first heated to adjust its shape and then hot-rolled. The hot rolling may be performed sequentially with rough rolling and finish milling. By the hot-rolling step, the steel may be formed into hot-rolled steel. The hot-rolled steel may be a hot-rolled steel plate.

The rough rolling is a step of rolling the slab to manufacture a bar, and may be performed in the range of 1000 °C from the reheating end temperature (1,150 °C to 1,300 °C).

The finish milling may be completed at a finish rolling temperature (FRT) of 800°C to 1,000°C. When the finish rolling temperature is below 800°C, the rolling load may increase rapidly, which may reduce productivity. When the finish rolling temperature is higher than 1,000°C, grains may become coarser, which may result in a decrease in the strength of final steel.

Next, the hot-rolled steel is cooled to a predetermined coiling temperature. The cooling may be either air cooling or water cooling, and may be performed at a cooling rate of, for example, 1 °C/sec to 100 °C/sec. A faster cooling rate may be beneficial for reducing an average grain size. The cooling is preferably performed to a coiling temperature of, for example, 400°C to 700°C, for example, 500°C to 650°C.

Next, the hot-rolled steel plate is coiled at a coiling temperature (CT) of, for example, 400°C to 700°C, for example, 500°C to 650°C. When the coiling temperature is less than 400°C, the shape of the coiled hot-rolled coil becomes uneven, and the strength increases, which may increase the rolling load during cold rolling. When the coiling temperature is higher than 700°C, an uneven microstructure may occur due to a difference in cooling rates between the center and edge of the steel plate, and defects may occur in a subsequent process due to surface oxidation, etc. The coiled steel may be cooled to room temperature.

Cold-rolled steel plate manufacturing step (S120)

In the cold-rolled steel plate manufacturing step (S120), the hot-rolled steel plate is used and cold rolling is performed to match the thickness of a final steel plate product. The coiled hot-rolled steel plate is pickled by cleaning it with acid. Next, the pickled hot-rolled steel plate is cold-rolled at a cold reduction ratio of, for example, 35% or more, for example, 35% to 70% to form a cold-rolled steel plate. The higher the reduction ratio, the more hydrogen embrittlement resistance may be increased due to the grain refinement effect. When the cold reduction ratio is less than 35%, it is difficult to obtain a uniform microstructure, and since the amount of nuclei generated for recrystallization during annealing is small, grains may grow excessively during annealing, which will be described below, so that the strength may decrease rapidly. When the cold reduction ratio exceeds 70%, the amount of nuclei generated becomes excessive so that grains formed by annealing become too fine, which may reduce ductility and lower moldability.

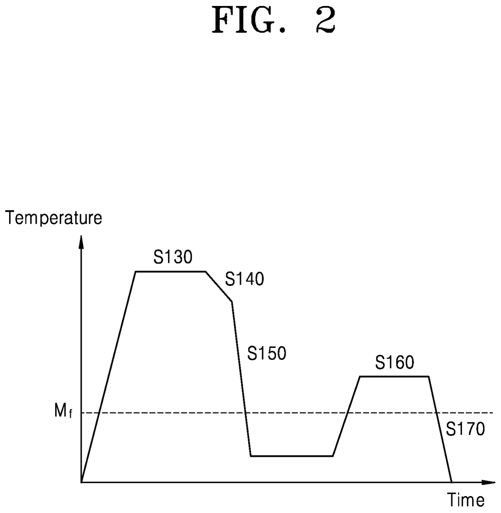

The cold-rolled steel plate manufactured by cold-rolling undergoes the following heat treatment steps. FIG. 2 illustrates the heat treatment history over time of this example, which will be explained step by step.

Annealing step (S130)

In the annealing step (S 130), the cold-rolled steel plate may be heat-treated in a continuous annealing furnace with a general slow cooling section.

The annealing is performed by heating at a temperature of, for example, Ac3 or higher, for example, 800°C to 900°C, at a heating rate of, for example, 1°C/sec or more, for example, 1°C/sec to 10°C/sec, and then maintaining the temperature for, for example, 60 seconds to 600 seconds. When the annealing temperature is lower than 800°C or the maintenance time is less than 60 seconds, it is difficult to form sufficient austenite, and the ferrite fraction may increase, resulting in a decrease in strength. When the annealing temperature is higher than 900°C or the maintenance time exceeds 600 seconds, the austenite grain size may become coarser or the productivity may be excessively reduced.

The Ac3 temperature may be calculated by the following equation.

$$Ac3 = 910 - 203 \times [C]^{0.5} - 30[Mn] + 44.7[Si] + 31.5[Mo] - 15.2[Ni]$$

where [C] denotes the carbon content in the steel (% by weight), [Mn] denotes the manganese content in the steel (% by weight), [Si] denotes the silicon content in the steel (% by weight), [Mo] denotes the molybdenum content in the steel (% by weight), and [Ni] denotes the nickel content in the steel (% by weight).

First cooling step (S140)

In the first cooling step (S140), the annealed cold-rolled steel plate is first cooled to, for example, 500°C to 700°C at a cooling rate of, for example, 1°C/sec to 20°C/sec. The cooling may be air cooling or water cooling. The first cooling may be referred to as a slow cooling step.

Second cooling step (S150)

In the second cooling step (S150), the first cooled cold-rolled steel plate is second cooled at a cooling rate of, for example, 5 °C/sec or more, for example, 5 °C/sec to 100 °C/sec, to, for example, a temperature lower than the martensite transformation end temperature (Mf), for example, from room temperature (0 °C to 40 °C) to 350 °C. In the second cooling step (S150), most of the austenite is transformed into fresh martensite as cooling is performed to a second cooling end temperature lower than Mf. The second cooling is advantageous when the cooling rate is high. The second cooling may be referred to as a rapid cooling step. Additional ferrite transformation should be suppressed during the second cooling.

Tempering step (S160)

In the tempering step (S160), heating is conducted at a heating rate of 1 °C/sec to 50 °C/sec and the temperature is maintained in the range of 100 °C to 350 °C for a predetermined time. By tempering, the formation and growth of transition carbides and the growth of cementite may proceed while fresh martensite changes into tempered martensite.
When the growth in the longitudinal direction of carbides is excessive, it may decrease the yield strength and tensile strength of steel, and it may also act as a fracture initiation point when hydrogen penetrates, making it susceptible to hydrogen embrittlement. Therefore, in the tempering step, the excessive growth of carbides may be suppressed by appropriately controlling the maintenance time depending upon the tempering temperature.
It is necessary to maintain a relatively short time at high temperatures to suppress the growth of cementite. For example, it may be performed for 60 to 600 seconds in a temperature range of 200°C to 350°C.
When tempering is performed at high temperatures, the growth of carbides in the longitudinal direction becomes very active, so it may be difficult to control the growth of carbides as they grow rapidly. On the other hand, in the case of relatively low-temperature tempering, heat treatment control for the growth of these carbides is easier, so the excessive growth of carbides may be effectively suppressed, which may be more advantageous in securing the strength and suppressing fracture due to hydrogen embrittlement. For example, it may be performed in a temperature range of 100°C to 200°C for 3 hours to 20 hours.
After the tempering is completed, the cold-rolled steel plate is cooled to room temperature (0°C to 40°C) at a cooling rate of 1°C/sec to 100°C/sec (S170).
The cold-rolled steel plate manufactured by the above-described method may additionally have a zinc-plated layer or a zinc alloy-plated layer formed on its surface by an electroplating method.

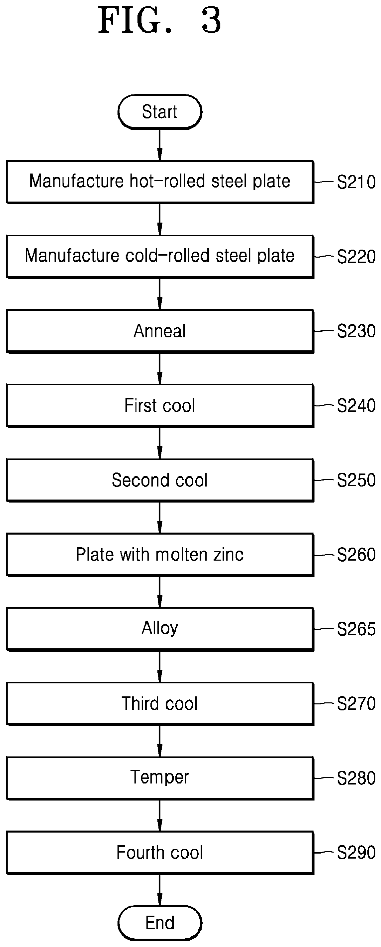

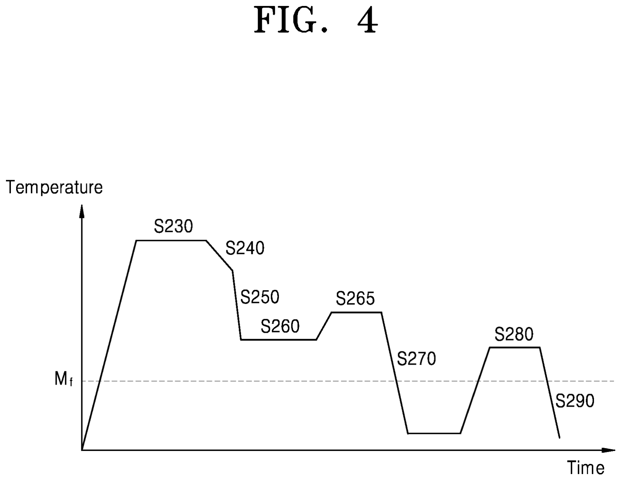

FIG. 3 is a process flowchart schematically illustrating a method of manufacturing an ultra-high-strength melt-plated cold-rolled steel plate with corrosion resistance according to an embodiment of the present invention. FIG. 4 illustrates the heat treatment history over time for this embodiment.
Referring to FIGS. 3 and 4, the method of manufacturing an ultra-high-strength melt-plated cold-rolled steel plate with corrosion resistance according to an embodiment of the present invention includes a hot-rolled steel plate manufacturing step (S210), a cold-rolled steel plate manufacturing step (S220), an annealing step (S230), a first cooling step (S240), a second cooling step (S250), a molten zinc-plating step (S260), an alloying step (S265), a third cooling step (S270) and a tempering step (S280).
In this embodiment, a hot-rolled steel plate manufacturing step (S210), a cold-rolled steel plate manufacturing step (S220), and an annealing step (S230) are the same as in the method of manufacturing a non-plated cold-rolled steel plate described above.

First cooling step (S240)

In the first cooling step (S240), the annealed cold-rolled steel plate is first cooled to, for example, 500°C to 700°C at a cooling rate of, for example, 1°C/sec to 20°C/sec, and maintained for 5 to 100 seconds.

Second cooling step (S250)

Next, in the second cooling step (S250), the cold-rolled steel plate is second cooled at a cooling rate of, for example, 5 °C/sec or more, for example, 5 °C/sec to 100 °C/sec, to a temperature range of, for example, 400 °C to 500 °C.

Molten zinc-plating step (S260)

After the second cooling step is completed, a molten zinc-plating step (S260) is performed. In the molten zinc-plating step (S260), the cold-rolled steel plate is immersed in a molten zinc-plating bath to form a molten zinc-plated layer. The temperature of the plating bath ranges from, for example, 400°C to 500°C. Under the plating bath conditions, a molten zinc-plated layer may be easily formed on the surface of the cold-rolled steel plate, and the adhesion of the plated layer may be excellent.
When a subsequent alloying step (S265) is not performed after the molten zinc-plating step (S260), the steel plate that has been plated and taken out of the plating bath undergoes the third cooling step (S270) described above, and thus austenite is transformed into martensite in this step. Next, the tempering step (S280) is performed, followed by cooling at room temperature (S290). The tempering step and subsequent steps have been described above, so their description is omitted to avoid duplication.

Alloying step (S265)

If necessary, an alloying step (S265) of alloying by heat-treating the cold-rolled steel plate on which the molten zinc-plated layer has been formed may be further performed. For the alloying step (S265), the steel plate that has been plated and taken out of the plating bath is put into a heat treatment device so that heat treatment for alloying is performed. The heat treatment for alloying may be performed by maintaining it, for example, at 450°C to 600°C, for example, for 5 to 100 seconds. As the molten zinc-plated layer grows stably during the heat treatment for alloying under the conditions, the adhesion of the plated layer may be excellent. When the heat treatment temperature for alloying is lower than 450°C, the alloying may not progress sufficiently, which may deteriorate the integrity of the molten zinc-plated layer. When the heat treatment temperature for alloying exceeds 600°C, a change in the material may occur as it passes into a dual-phase temperature range.

After the heat treatment for alloying is completed, the steel plate undergoes the third cooling step (S270) as described above, and thus austenite is transformed into martensite in this step. Next, the tempering step (S280) is performed, followed by cooling at room temperature (S290). The tempering step and subsequent steps have been described above, so their description is omitted to avoid duplication.

Experimental example

Hereinafter, a preferred experimental example is presented to help understand the present invention. However, the experimental example below is only to help understand the present invention, and the present invention is not limited by the experimental example below. Contents not described here can be sufficiently technically inferred by those skilled in this field of technology, so their description will be omitted.

Steel having the compositions (unit: % by weight) shown in Tables 1 and 2 below was prepared, and cold-rolled steel plates according to examples and comparative examples were prepared through the specified hot rolling and cold rolling processes and heat treatment process. In Tables 1 and 2, the remainder consists of iron (Fe) and impurities that are inevitably contained in the steelmaking process. The unit of content for each component is % by weight.

[Table 1]

| Classification | C | Si | Mn | Cr | Mo | Ti |
|---|---|---|---|---|---|---|
| Example 1 | 0.253 | 0.10 | 1.83 | 0.42 | 0.20 | 0.045 |
| Example 2 | 0.249 | 0.10 | 1.70 | 0.40 | 0.21 | 0.050 |
| Example 3 | 0.294 | 0.39 | 1.02 | 0.29 | 0.10 | 0.045 |
| Example 4 | 0.294 | 0.39 | 1.02 | 0.29 | 0.10 | 0.045 |
| Example 5 | 0.326 | 0.41 | 1.00 | 0.30 | 0.10 | 0.046 |
| Example 6 | 0.326 | 0.41 | 1.00 | 0.30 | 0.10 | 0.046 |
| Example 7 | 0.248 | 0.10 | 1.00 | 0.00 | 0.10 | 0.034 |
| Example 8 | 0.248 | 0.10 | 1.00 | 0.00 | 0.10 | 0.034 |
| Example 9 | 0.248 | 0.09 | 0.58 | 0.20 | 0.10 | 0.032 |
| Example 10 | 0.248 | 0.09 | 0.58 | 0.20 | 0.10 | 0.032 |
| Example 11 | 0.246 | 0.09 | 1.97 | 0.38 | 0.20 | 0.045 |
| Example 12 | 0.258 | 0.11 | 1.86 | 0.39 | 0.19 | 0.050 |
| Comparative Example 1 | 0.246 | 0.09 | 1.97 | 0.38 | 0.20 | 0.062 |
| Comparative Example 2 | 0.258 | 0.11 | 1.86 | 0.39 | 0.19 | 0.046 |
| Comparative Example 3 | 0.321 | 0.39 | 0.97 | 0.29 | 0.00 | 0.040 |
| Comparative Example 4 | 0.321 | 0.39 | 0.97 | 0.29 | 0.00 | 0.040 |
| Comparative Example 5 | 0.244 | 0.09 | 0.97 | 0.00 | 0.10 | 0.038 |
| Comparative Example 6 | 0.244 | 0.09 | 0.97 | 0.00 | 0.10 | 0.038 |

(continued)

| Classification | C | Si | Mn | Cr | Mo | Ti |
|---|---|---|---|---|---|---|
| Comparative Example 7 | 0.246 | 0.09 | 1.97 | 0.38 | 0.20 | 0.062 |
| Comparative Example 8 | 0.258 | 0.11 | 1.86 | 0.39 | 0.19 | 0.046 |

[Table 2]

| Classification | Ni | Cu | Nb | V | B | Cu/Ni |
|---|---|---|---|---|---|---|
| Example 1 | 0.50 | 0.50 | 0.001 | 0.001 | 0.0029 | 1.00 |
| Example 2 | 0.02 | 0.10 | 0.002 | 0.003 | 0.0028 | 5.00 |
| Example 3 | 0.14 | 0.14 | 0.030 | 0.003 | 0.0022 | 1.00 |
| Example 4 | 0.14 | 0.14 | 0.030 | 0.003 | 0.0022 | 1.00 |
| Example 5 | 0.08 | 0.15 | 0.001 | 0.030 | 0.0023 | 1.88 |
| Example 6 | 0.08 | 0.15 | 0.001 | 0.030 | 0.0023 | 1.88 |
| Example 7 | 0.02 | 0.08 | 0.003 | 0.031 | 0.0019 | 4.00 |
| Example 8 | 0.02 | 0.08 | 0.003 | 0.031 | 0.0019 | 4.00 |
| Example 9 | 0.06 | 0.08 | 0.001 | 0.030 | 0.0020 | 1.33 |
| Example 10 | 0.06 | 0.08 | 0.001 | 0.030 | 0.0020 | 1.33 |
| Example 11 | 0.50 | 0.50 | 0.001 | 0.001 | 0.0029 | 1.00 |
| Example 12 | 0.02 | 0.10 | 0.002 | 0.003 | 0.0028 | 5.00 |
| Comparative Example 1 | 0.00 | 0.00 | 0.003 | 0.003 | 0.0025 | Not added |
| Comparative Example 2 | 0.02 | 0.01 | 0.001 | 0.003 | 0.0024 | 0.50 |
| Comparative Example 3 | 0.00 | 0.00 | 0.001 | 0.100 | 0.0020 | Not added |
| Comparative Example 4 | 0.00 | 0.00 | 0.001 | 0.100 | 0.0020 | Not added |
| Comparative Example 5 | 0.00 | 0.00 | 0.003 | 0.029 | 0.0025 | Not added |
| Comparative Example 6 | 0.00 | 0.00 | 0.003 | 0.029 | 0.0025 | Not added |
| Comparative Example 7 | 0.00 | 0.00 | 0.003 | 0.003 | 0.0025 | Not added |
| Comparative Example 8 | 0.02 | 0.01 | 0.001 | 0.003 | 0.0024 | 0.50 |

Referring to Tables 1 and 2, Examples 1 to 10 and Comparative Examples 1 to 6 are cold-rolled steel plates, and Examples 11 and 12 and Comparative Examples 7 and 8 are alloyed molten zinc steel plates. The examples satisfy the compositional ranges of the present invention. On the other hand, the comparative examples differ from the examples in that the comparative examples do not include copper and nickel or, as in Comparative Example 2, the ratio of Cu/Ni is lower than the lower limit of the present invention. Table 3 shows the manufacturing process condition values of the ultra-high-strength cold-rolled steel plates with corrosion resistance of the comparative examples and the examples.

[Table 3]

| Classification | Finish rolling temperature (°C) | Coiling temperature (°C) | Cold-rolling reduction ratio (%) | Annealing temperature (°C) | Second cooling end temperature (°C) | Tempering temperature (°C) | Tempering time (sec) |
|---|---|---|---|---|---|---|---|
| Example 1 | 900 | 560 | 56.5 | 840 | 250 | 150 | 21,600 |
| Example 2 | 900 | 560 | 56.5 | 840 | 250 | 150 | 25,200 |
| Example 3 | 900 | 540 | 58.8 | 830 | 121 | 250 | 120 |
| Example 4 | 900 | 540 | 58.8 | 830 | 170 | 250 | 120 |

EP 4 644 579 A1

(continued)

| Classification | Finish rolling temperature (°C) | Coiling temperature (°C) | Cold-rolling reduction ratio (%) | Annealing temperature (°C) | Second cooling end temperature (°C) | Tempering temperature (°C) | Tempering time (sec) |
|---|---|---|---|---|---|---|---|
| Example 5 | 900 | 560 | 58.8 | 870 | 148 | 200 | 240 |
| Example 6 | 900 | 560 | 58.8 | 870 | 165 | 200 | 240 |
| Example 7 | 900 | 540 | 56.5 | 870 | 120 | 250 | 120 |
| Example 8 | 900 | 540 | 56.5 | 870 | 170 | 250 | 120 |
| Example 9 | 900 | 560 | 56.5 | 870 | 120 | 250 | 120 |
| Example 10 | 900 | 560 | 56.5 | 870 | 170 | 250 | 120 |
| Example 11 | 900 | 560 | 56.5 | 840 | 450 | 150 | 21,600 |
| Example 12 | 900 | 560 | 56.5 | 840 | 480 | 150 | 25,200 |
| Comparati ve Example 1 | 900 | 560 | 46.4 | 840 | 200 | 150 | 21,600 |
| Comparati ve Example 2 | 900 | 560 | 46.4 | 840 | 200 | 150 | 21,600 |
| Comparati ve Example 3 | 900 | 540 | 58.8 | 850 | 117 | 250 | 120 |
| Comparati ve Example 4 | 900 | 540 | 58.8 | 850 | 149 | 250 | 120 |
| Comparati ve Example 5 | 900 | 540 | 56.5 | 870 | 120 | 250 | 120 |
| Comparative Example 6 | 900 | 540 | 56.5 | 870 | 170 | 250 | 120 |
| Comparati ve Example 7 | 900 | 560 | 46.4 | 840 | 450 | 150 | 21,600 |
| Comparati ve Example 8 | 900 | 560 | 46.4 | 840 | 480 | 150 | 21,600 |

All of the examples and the comparative examples were performed at a reheating temperature of 1200°C to 1250°C for hot-rolling. Table 4 shows the measurement results of the yield strength (YS), tensile strength (TS), elongation index (EL), and breaking time of each of the comparative examples and the examples.

[Table 4]

| Classification | Yield strength ( MPa) | Tensile strength ( MPa) | Elongation index (%) | Fracture time (h) |
|---|---|---|---|---|
| Example 1 | 1257 | 1533 | 7.0 | 00%) |
| Example 2 | 1198 | 1541 | 7.1 | Unfractured (100%) |
| Example 3 | 1400 | 1773 | 8.1 | Unfractured (100%) |
| Example 4 | 1322 | 1771 | 8.1 | Unfractured (100%) |
| Example 5 | 1409 | 1864 | 7.2 | Unfractured (100%) |
| Example 6 | 1378 | 1862 | 7.9 | Unfractured (100%) |
| Example 7 | 1311 | 1570 | 7.2 | Unfractured (100%) |
| Example 8 | 1265 | 1556 | 7.8 | Unfractured (100%) |

(continued)

| Classification | Yield strength ( MPa) | Tensile strength ( MPa) | Elongation index (%) | Fracture time (h) |
|---|---|---|---|---|
| Example 9 | 1271 | 1557 | 6.6 | Unfractured (100%) |
| Example 10 | 1244 | 1524 | 6.6 | Unfractured (100%) |
| Example 11 | 1299 | 1636 | 5.2 | Unfractured (100%) |
| Example 12 | 1292 | 1577 | 5.2 | Unfractured (100%) |
| Comparative Example 1 | 1249 | 1655 | 8.6 | 24 (90%, 100%) |
| Comparative Example 2 | 1336 | 1726 | 8.8 | 8 (90%, 100%) |
| Comparative Example 3 | 1487 | 1854 | 8.2 | 9 (100%) |
| Comparative Example 4 | 1385 | 1848 | 8.7 | 11 (90%, 100%) |
| Comparative Example 5 | 1222 | 1543 | 7.1 | 84 (100%) |
| Comparative Example 6 | 1266 | 1521 | 8.0 | 88 (100%) |
| Comparative Example 7 | 1209 | 1587 | 7.3 | 72 (90%, 100%) |
| Comparative Example 8 | 1200 | 1598 | 7.3 | 64 (90%, 100%) |

In the examples, no fracture occurred under conditions where a load of 100% of the yield strength was applied for 100 hours or more. Therefore, it can be seen that the examples have excellent corrosion resistance against hydrogen embrittlement. On the other hand, the comparative examples showed fracture in less than 100 hours under conditions where loads of 90% and 100% of the yield strength were applied. This shows that the comparative examples are vulnerable to hydrogen embrittlement as they do not contain nickel and copper. In addition, it can be seen from the results of Comparative Example 4 and Comparative Example 8 that even when the content ratio of nickel to copper (Cu/Ni) is less than 0.5, it is vulnerable to hydrogen embrittlement. In addition, Examples 1, 2, 11 and 12, which were tempered for a long time of 20,000 seconds or more at a relatively low temperature of 150°C, did not show fracture by the hydrogen embrittlement test, compared to other examples, even after a longer time. Therefore, Examples 1, 2, 11 and 12 can be seen to have better corrosion resistance against hydrogen embrittlement. As explained above, this is because, in the case of low-temperature tempering, it is easier to control the heat treatment for the length growth of carbides, which can suppress fracture due to hydrogen embrittlement.

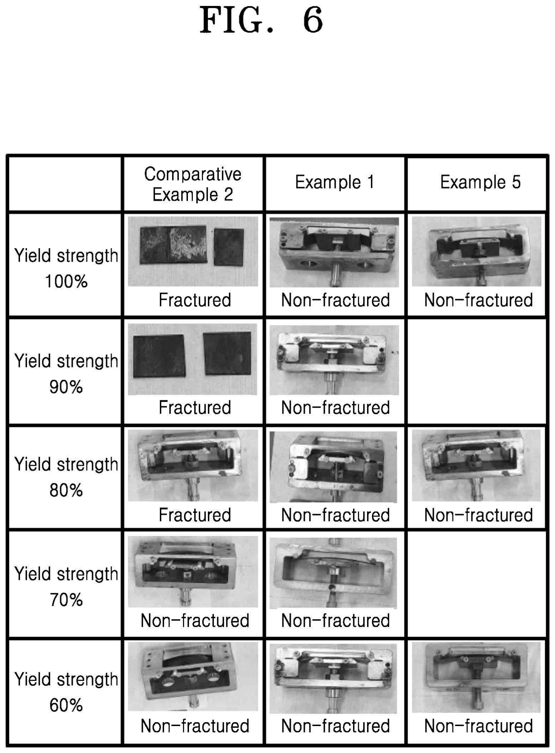

FIG. 6 is a set of photographs illustrating the fractured states after performing a hydrogen embrittlement test on the ultra-high-strength cold-rolled steel plate with corrosion resistance according to an embodiment of the present invention.

Referring to FIG. 6, Comparative Example 2 was fractured under loads of 100% and 90% of the yield strength. On the other hand, Examples 1 and 5 were not fractured under loads of 60% to 100% of the yield strength. Therefore, it can be seen that the examples have excellent corrosion resistance against hydrogen embrittlement.

It will be obvious to those skilled in the art, to which the technical idea of the invention pertains, that the technical idea of the invention described above is not limited to the above-described embodiments and the accompanying drawings and various substitutions, modifications, and changes are possible within the scope of the technical idea of the invention.

## Claims

1.  An ultra-high-strength cold-rolled steel plate with corrosion resistance, comprising: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and a remainder containing iron (Fe) and other inevitable impurities,

    wherein a ratio ([Cu]/[Ni]) of a content of the copper (Cu) to a content of the nickel (Ni) ranges from 0.54 to 5.7, and the ultra-high-strength cold-rolled steel plate satisfies: yield strength (YS): 1000 MPa or more, tensile strength (TS): 1100 MPa or more, elongation index (EL): 3% or more, and hydrogen embrittlement test method-based non-fracture time: 100 hours or more.

2. The ultra-high-strength cold-rolled steel plate according to claim 1, wherein a microstructure of the ultra-high-strength cold-rolled steel plate with corrosion resistance is selected from among ferrite, bainite and retained austenite in which an area fraction of martensite is 95% or more and less than 100% and an area fraction of remaining phases is greater than 0 and 5 % or less.

3. The ultra-high-strength cold-rolled steel plate according to claim 1, wherein the ultra-high-strength cold-rolled steel plate with corrosion resistance further comprises carbides,
wherein the carbides have an average size of 100 nm or less and an aspect ratio of 5 or less.

4. The ultra-high-strength cold-rolled steel plate according to claim 3, wherein the carbides comprise at least one of Fe-based carbides, Ti-based carbides, Nb-based carbides, V-based carbides, and Mo-based carbides.

5. A method of manufacturing an ultra-high-strength cold-rolled steel plate with corrosion resistance, the method comprising:

manufacturing a hot-rolled steel plate by hot-rolling a steel comprising: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and a remainder containing iron (Fe) and other inevitable impurities, in which a ratio ([Cu]/[Ni]) of a content of the copper (Cu) to a content of the nickel (Ni) ranges from 0.54 to 5.7;
manufacturing a cold-rolled steel plate by cold-rolling the hot-rolled steel plate;
annealing the cold-rolled steel plate by maintaining it at 800°C to 900°C for 60 seconds to 600 seconds;
first cooling the annealed cold-rolled steel plate to 500°C to 700°C at a cooling rate of 1 °C/sec to 20 °C/sec;
second cooling the first cooled cold-rolled steel plate to a temperature of less than Mf at a cooling rate of 5 °C/sec to 100 °C/sec; and
tempering the cold-rolled steel plate, which has been subjected to the second cooling, at 100°C to 350°C.

6. The method according to claim 5, wherein the manufacturing of the hot-rolled steel plate comprises:

reheating the steel having the alloy compositions at a reheating temperature of 1,150°C to 1,300°C;
manufacturing a hot-rolled steel plate by hot-rolling the reheated steel such that the hot-rolling is finished at a finish rolling temperature of 800°C to 1,000°C; and
coiling the hot-rolled steel plate at a coiling temperature of 400°C to 700°C.

7. The method according to claim 5, wherein the tempering is performed in a temperature range of greater than 200°C and 350°C or less for 60 seconds to 600 seconds.

8. The method according to claim 5, wherein the tempering is performed in a temperature range of 100°C to 200°C for 3 hours to 20 hours.

9. The method according to claim 5, wherein the ultra-high-strength cold-rolled steel plate with corrosion resistance manufactured by the method satisfies: yield strength (YS): 1000 MPa or more, tensile strength (TS): 1100 MPa or more, elongation index (EL): 3% or more, and hydrogen embrittlement test method-based non-fracture time: 100 hours or more, and has microstructures in which an area fraction of martensite/tempered martensite is 95% or more and less than 100% and an area fraction of remaining phases which is one or more phases selected from among ferrite, bainite and retained austenite is greater than 0 and 5 % or less.

10. A method of manufacturing an ultra-high-strength cold-rolled steel plate with corrosion resistance, the method comprising:

manufacturing a hot-rolled steel plate by hot-rolling a steel comprising: in % by weight, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): 0.02% to 3.0%, copper (Cu): 0.02% to 3.0%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and a remainder containing iron (Fe) and other inevitable impurities, in which a ratio ([Cu]/[Ni]) of a content of the copper (Cu) to a content of the nickel (Ni) ranges from 0.54 to 5.7;
manufacturing a cold-rolled steel plate by cold-rolling the hot-rolled steel plate;
annealing the cold-rolled steel plate by maintaining it at 800°C to 900°C for 60 seconds to 600 seconds;
first cooling the annealed cold-rolled steel plate to 500°C to 700°C at a cooling rate of 1 °C/sec to 20 °C/sec;
second cooling the first cooled cold-rolled steel plate to 400°C to 500°C at a cooling rate of 5 °C/sec to 100 °C/sec;
molten zinc-plating the second cooled cold-rolled steel plate; and
tempering the molten zinc-plated cold-rolled steel plate at 100°C to 350°C.

11. The method according to claim 10, further comprising, between the molten zinc-plating and the tempering, alloying the molten zinc-plated cold-rolled steel plate through heat treatment at 450°C to 600°C.

12. The method according to claim 10, wherein the tempering is performed in a temperature range of higher than 200°C and 350°C or less for 60 seconds to 600 seconds.

13. The method according to claim 10, wherein the tempering is performed in a temperature range of 100°C to 200°C for 3 hours to 20 hours.

# FIG. 1

```
            ( Start )
               │
               ▼
┌────────────────────────────────────┐
│  Manufacture hot-rolled steel plate │──S110
└────────────────────────────────────┘
               │
               ▼
┌────────────────────────────────────┐
│  Manufacture cold-rolled steel plate│──S120
└────────────────────────────────────┘
               │
               ▼
┌────────────────────────────────────┐
│               Anneal                │──S130
└────────────────────────────────────┘
               │
               ▼
┌────────────────────────────────────┐
│             First cool              │──S140
└────────────────────────────────────┘
               │
               ▼
┌────────────────────────────────────┐
│             Second cool             │──S150
└────────────────────────────────────┘
               │
               ▼
┌────────────────────────────────────┐
│               Temper                │──S160
└────────────────────────────────────┘
               │
               ▼
┌────────────────────────────────────┐
│             Third cool              │──S170
└────────────────────────────────────┘
               │
               ▼
            (  End  )
```

# FIG. 2

# FIG. 3

Start

Manufacture hot-rolled steel plate — S210

Manufacture cold-rolled steel plate — S220

Anneal — S230

First cool — S240

Second cool — S250

Plate with molten zinc — S260

Alloy — S265

Third cool — S270

Temper — S280

Fourth cool — S290

End

# FIG. 4

# FIG. 5

# FIG. 6

| | Comparative Example 2 | Example 1 | Example 5 |
|---|---|---|---|
| Yield strength 100% | Fractured | Non-fractured | Non-fractured |
| Yield strength 90% | Fractured | Non-fractured | |
| Yield strength 80% | Fractured | Non-fractured | Non-fractured |
| Yield strength 70% | Non-fractured | Non-fractured | |
| Yield strength 60% | Non-fractured | Non-fractured | Non-fractured |

## INTERNATIONAL SEARCH REPORT

| International application No. |
| --- |
| **PCT/KR2023/020880** |

| A. | CLASSIFICATION OF SUBJECT MATTER |
| --- | --- |

C22C 38/58(2006.01)i; C22C 38/34(2006.01)i; C22C 38/06(2006.01)i; C22C 38/44(2006.01)i; C22C 38/42(2006.01)i; C22C 38/50(2006.01)i; C22C 38/48(2006.01)i; C22C 38/46(2006.01)i; C22C 38/54(2006.01)i; C21D 8/02(2006.01)i

According to International Patent Classification (IPC) or to both national classification and IPC

| B. | FIELDS SEARCHED |
| --- | --- |

Minimum documentation searched (classification system followed by classification symbols)

C22C 38/58(2006.01); C21D 8/02(2006.01); C22C 38/00(2006.01); C22C 38/02(2006.01); C22C 38/06(2006.01); C22C 38/14(2006.01); C22C 38/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 부식(corrosion), 마르텐사이트(martensite), 템퍼링(tempering), 구리(Cu), 니켈(Ni)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2014-034716 A (NIPPON STEEL & SUMITOMO METAL) 24 February 2014 (2014-02-24) See paragraphs [0045] and [0062]-[0064], claims 1-4, 6 and 8 and tables 1-3. | 1-9 |
| Y | | 10-13 |
| Y | KR 10-2018-0016518 A (NIPPON STEEL & SUMIKIN STAINLESS STEEL CORPORATION) 14 February 2018 (2018-02-14) See claims 1 and 8. | 10-13 |
| A | KR 10-2017-0103881 A (JFE STEEL CORPORATION) 13 September 2017 (2017-09-13) See claims 1-3 and tables 1-3. | 1-13 |
| A | JP 2009-242816 A (JFE STEEL CORP.) 22 October 2009 (2009-10-22) See claims 1-5 and tables 1-3. | 1-13 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 April 2024** | **08 April 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/020880**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2016-0047465 A (JFE STEEL CORPORATION) 02 May 2016 (2016-05-02)<br>See claims 1-5. | 1-13 |

Form PCT/ISA/210 (second sheet) (July 2022)

## INTERNATIONAL SEARCH REPORT
### Information on patent family members

International application No.

**PCT/KR2023/020880**

| Patent document cited in search report | | | Publication date (day/month/year) | Patent family member(s) | | | Publication date (day/month/year) |
|---|---|---|---|---|---|---|---|
| JP | 2014-034716 | A | 24 February 2014 | JP | 5857909 | B2 | 10 February 2016 |
| KR | 10-2018-0016518 | A | 14 February 2018 | BR | 112017025389 | A2 | 07 August 2018 |
| | | | | CN | 107636184 | A | 26 January 2018 |
| | | | | CN | 114990431 | A | 02 September 2022 |
| | | | | EP | 3309273 | A1 | 18 April 2018 |
| | | | | EP | 3309273 | A4 | 26 December 2018 |
| | | | | EP | 3309273 | B1 | 26 May 2021 |
| | | | | JP | 6187710 | B2 | 30 August 2017 |
| | | | | JP | WO2016-199922 | A1 | 22 June 2017 |
| | | | | KR | 10-2081361 | B1 | 25 February 2020 |
| | | | | MX | 2017015286 | A | 19 February 2018 |
| | | | | TW | 201713778 | A | 16 April 2017 |
| | | | | TW | I602927 | B | 21 October 2017 |
| | | | | US | 10745775 | B2 | 18 August 2020 |
| | | | | US | 2018-0298462 | A1 | 18 October 2018 |
| | | | | WO | 2016-199922 | A1 | 15 December 2016 |
| KR | 10-2017-0103881 | A | 13 September 2017 | CN | 107208236 | A | 26 September 2017 |
| | | | | CN | 107208236 | B | 25 January 2019 |
| | | | | EP | 3257962 | A1 | 20 December 2017 |
| | | | | EP | 3257962 | A4 | 20 December 2017 |
| | | | | EP | 3257962 | B1 | 28 August 2019 |
| | | | | JP | 6057027 | B1 | 11 January 2017 |
| | | | | JP | WO2016-129214 | A1 | 27 April 2017 |
| | | | | KR | 10-1990717 | B1 | 18 June 2019 |
| | | | | MX | 2017010340 | A | 23 January 2018 |
| | | | | US | 10494689 | B2 | 03 December 2019 |
| | | | | US | 2018-0023154 | A1 | 25 January 2018 |
| | | | | WO | 2016-129214 | A1 | 18 August 2016 |
| JP | 2009-242816 | A | 22 October 2009 | JP | 5251208 | B2 | 31 July 2013 |
| KR | 10-2016-0047465 | A | 02 May 2016 | CN | 105452513 | A | 30 March 2016 |
| | | | | CN | 105452513 | B | 15 August 2017 |
| | | | | EP | 3012339 | A1 | 27 April 2016 |
| | | | | EP | 3012339 | A4 | 13 July 2016 |
| | | | | EP | 3012339 | B1 | 18 December 2019 |
| | | | | JP | 2015-034326 | A | 19 February 2015 |
| | | | | JP | 5821911 | B2 | 24 November 2015 |
| | | | | KR | 10-1778643 | B1 | 14 September 2017 |
| | | | | MX | 2016001724 | A | 02 June 2016 |
| | | | | US | 10156005 | B2 | 18 December 2018 |
| | | | | US | 2016-0177427 | A1 | 23 June 2016 |
| | | | | WO | 2015-019557 | A1 | 12 February 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120144482